# EUROPÄISCHE PATENTSCHRIFT

(11) **EP 3 337 679 B1**
(45) Veröffentlichungstag und Bekanntmachung des Hinweises auf die Patenterteilung: **10.07.2019**
(21) Anmeldenummer: 16724907.7
(22) Anmeldetag: 26.05.2016
(51) Int. Cl.: B60C 11/12

(54) **FAHRZEUGLUFTREIFEN**
PNEUMATIC VEHICLE TYRES
PNEUMATIQUE DE VÉHICULE

(30) Priorität: 18.08.2015 DE 102015215710
(43) Veröffentlichungstag der Anmeldung: 27.06.2018
(73) Patentinhaber: Continental Reifen Deutschland GmbH, 30165 Hannover (DE)
(72) Erfinder: DARIES, Ronald, 28277 Charlotte, NC (US); GONCALVES ANKIEWICZ, Amelia Olga, 30559 Hannover (DE)
(74) Vertreter: Finger, Karsten
(86) Internationale Anmeldenummer: PCT/EP2016/061869
(87) Internationale Veröffentlichungsnummer: WO 2017/028972

(56) Entgegenhaltungen:
- EP-A1- 2 070 731
- EP-A1- 2 133 217
- EP-A1- 2 570 273
- US-A- 4 598 747

## Beschreibung

Die Erfindung betrifft ein Laufstreifenprofil eines Fahrzeugluftreifens mit radial erhabenen, von Rillen oder Nuten begrenzten Profilelementen, mit in der radial äußeren Oberfläche von radial erhabenen Profilelementen ausgebildeten Feineinschnitten mit geradliniger Haupterstreckungsrichtung, welche zumindest in einem Abschnitt ihrer Erstreckung in der radial äußeren Oberfläche längs ihrer Erstreckung jeweils mit einem Verlauf ausgebildet sind mit einer längs der Hauterstreckungsrichtung ausgerichteten ersten Wellen- oder Zickzackform mit in Haupterstreckungsrichtung ausgerichteter erster Nulldurchgangslinie, wobei die Wellen- oder Zickzackform in Bezug auf die Nulldurchgangslinie längs der Haupterstreckung alternierend ausgebildete Berge und Täler definiert, mit einer Amplitude A₁, welche den Abstand der Extremwerte der Wellen- oder Zickzackform von der ersten Nulldurchgangslinie bildet, wobei die in Haupterstreckungsrichtung in zwei hintereinander ausgebildete Bergen ausgebildeten Extremwerten und die in Haupterstreckungsrichtung in zwei hintereinander ausgebildete Tälern ausgebildeten Extremwerten jeweils im Abstand der Länge L₁ von einander ausgebildet sind, bei dem der Feineinschnitt zumindest in einem Erstreckungsbereich zwischen dem in einem Berg ausgebildeten Extremwert und dem in einem benachbarten Tal ausgebildeten Extremwert der ersten Wellen- oder Zickzackform mit einem durch Überlagerung der ersten Wellen- oder Zickzackform mit einer zweiten Wellen- oder Zickzackform gebildeten Verlauf ausgebildet ist, wobei die zweite Wellen- oder Zickzackform längs ihrer Erstreckung alternierend ausgebildete Berge und Täler ihres Verlaufs definieren, mit einer Amplitude A₂ mit A₂< A₁, welche den Abstand der Extremwerte der zweiten Wellen- oder Zickzackform von der Nulldurchgangslinie der zweiten Wellen- oder Zickzackform bildet, wobei die in Erstreckungsrichtung in zwei hintereinander ausgebildete Bergen ausgebildeten Extremwerte und die in Erstreckungsrichtung in zwei hintereinander ausgebildete Tälern ausgebildeten Extremwerte jeweils im Abstand der Länge L₂ mit L₂ < L₁ von einander ausgebildet sind.

Derartige Laufstreifenprofile sind bekannt. Die erforderliche Umfangs- und Quersteifigkeit des Laufstreifenprofils sowie der erhabenen Profilelemente beschränken die Zahl der in den Profilelementen einsetzbaren Feineinschnitte und somit der hierdurch ermöglichten Griffkanten. Zur Erzielung guter Nassgriffeigenschaften sowie Griffeigenschaften auf Schnee und Matsch ist jedoch eine im Bereich der Bodenaufstandsfläche möglichst große wirksame Kantenlänge der Feineinschnitte in Umfangs- und in axialer Richtung wünschenswert. Die radial erhabenen Profilelemente - wie beispielsweise Profilblockelemente oder Profilrippen - können zwar zur Vergrößerung der wirksamen Griffkantenlänge der Feineinschnitte vergrößert gewählt ausgebildet werden. Dies hat jedoch negativen Einfluss auf andere Eigenschaften des Reifens. So wird hierdurch die Freiheit der Konfiguration von vielen breiten Rillen zur Aufnahme und zur Ableitung von Wasser aus dem Profil beschränkt. Eine besonders große Dimensionierung der erhabenen Profilelemente kann durch sich auch negativ auf den Rollwiderstand auswirken.

Aus der EP2570273A3 ist eine Ausbildung eines Laufstreifenprofils gemäß den Merkmalen des Oberbegriffs von Anspruch 1 bekannt. Diese Ausbildung ermöglicht, dass auch bei zur Sicherstellung der erforderlichen Steifigkeit beschränkten Zahl von ausgebildeten Feineinschnitten eine sehr hohe wirksame Kantenlänge von Feineinschnitten zum Griff in Umfangs- und in axialer Richtung gewährleistet werden kann. Die überlagerte Ausbildung von einer ersten zick-zack- oder wellenförmiger Feineinschnittskontur mit einer zweiten Zick-Zack oder wellenförmigen Feineinschnittskontur zumindest in einem oder mehreren Erstreckungsbereichen, die jeweils zwischen benachbarten Extremwerten der ersten Wellenform oder Zickzackform ausgebildet sind, wobei die zweite Amplitude A₂ kleiner als die erste Amplitude A₁ und die zweite Länge L₂ kleiner als die erste L₁ ausgebildet ist, bewirkt eine deutliche Erhöhung der durch den jeweiligen Feineinschnitt auf engem Raum erzielbaren Kantenlänge sowohl in Umfangsrichtung als auch in axialer Richtung. Die Überlagerung der beiden Zick-Zack-Formen bzw. Wellenformen bietet aufgrund der gewählten Form der Überlagerung darüber hinaus einen sehr formstabilen Feineinschnitt, der dem übermäßigen Abrieb der in den Extremwerten ausgebildeten Spitzen oder Ecken des Gummimaterials des Profilelementes entgegen wirkt. Die überlagerte Zick-Zack-Formen bzw. Wellenformen ermöglicht eine zusätzlich erhöhte Stützwirkung der durch den Feineinschnitt ausgebildeten korrespondierenden Feineinschnittswände trotz langer wirksamer Griffkanten die Steifigkeit des Profilelementes. Die radial erhabenen Profilelemente können weiterhin mit hoher Steifigkeit ausgebildet werden, ohne die Auslegung des Profils mit zur großen Wasseraufnahme ausgelegten Rillen im Profil zu beeinträchtigen. Auch bei relativ kleinen radial erhabenen Profilelementen kann eine große Griffkantenwirkung ermöglicht werden. Aus dem Dokument ist auch bekannt, den Feineinschnitt ausgehend von der radial äußeren Oberfläche längs der radialen Erstreckung nach innen bis zum Feineinschnittgrund mit kontinuierlich abnehmender Amplitude A₁ oder A₂ auszubilden. Hierduch kann über die Lebensdauer des Reifens die Verzahnung zur Übertragung maximaler Kräften in Umfangs- und in Querrichtung des Reifens auf annähernd gleichem Niveau aufrechterhalten werden. Die aus diesem Dokument bekannten Ausbildungen sind jedoch aufgrund der bis in den Bereich des Feineinschnittsgrund wirksam ausgebildeten Überlagerung der beiden Zick-Zack-Formen bzw. Wellenformen hinsichtlich ihrer Entformbarkeit immer noch eingeschränkt.

Der Erfindung liegt die Aufgabe zugrunde, in einfacher Weise bei einem derartigen Laufstreifenprofil mit Feineinschnitten trotz hoher lateraler Steifigkeit der erhabenen Profilelemente eine möglichst große wirksame Griffkantenlänge der Feineinschnitte zur Optimierung des Nassgriffs bei verbesserter Entformbarkeit zu ermöglichen.

Die Aufgabe wird erfindungsgemäß durch die Ausbildung eines Laufstreifenprofils eines Fahrzeugluftreifens mit radial erhabenen, von Rillen oder Nuten begrenzten Profilelementen, mit in der radial äußeren Oberfläche von radial erhabenen Profilelementen ausgebildeten Feineinschnitten mit geradliniger Haupterstreckungsrichtung, welche zumindest in einem Abschnitt ihrer Erstreckung in der radial äußeren Oberfläche längs ihrer Erstreckung jeweils mit einem Verlauf ausgebildet sind mit einer längs der Hauterstreckungsrichtung ausgerichteten ersten Wellen- oder Zickzackform mit in Haupterstreckungsrichtung ausgerichteter erster Nulldurchgangslinie, wobei die Wellen- oder Zickzackform in Bezug auf die Nulldurchgangslinie längs der Haupterstreckung alternierend ausgebildete Berge und Täler definiert, mit einer Amplitude A₁, welche den Abstand der Extremwerte der Wellen- oder Zickzackform von der ersten Nulldurchgangslinie bildet, wobei die in Haupterstreckungsrichtung in zwei hintereinander ausgebildete Bergen ausgebildeten Extremwerten und die in Haupterstreckungsrichtung in zwei hintereinander ausgebildete Tälern ausgebildeten Extremwerten jeweils im Abstand der Länge L₁ von einander ausgebildet sind, bei dem der Feineinschnitt zumindest in einem Erstreckungsbereich zwischen dem in einem Berg ausgebildeten Extremwert und dem in einem benachbarten Tal ausgebildeten Extremwert der ersten Wellen- oder Zickzackform mit einem durch Überlagerung der ersten Wellen- oder Zickzackform mit einer zweiten Wellen- oder Zickzackform gebildeten Verlauf ausgebildet ist, wobei die zweite Wellen- oder Zickzackform längs ihrer Erstreckung alternierend ausgebildete Berge und Täler ihres Verlaufs definieren, mit einer Amplitude A₂ mit A₂< A₁, welche den Abstand der Extremwerte der zweiten Wellen- oder Zickzackform von der Nulldurchgangslinie der zweiten Wellen- oder Zickzackform bildet, wobei die in Erstreckungsrichtung in zwei hintereinander ausgebildete Bergen ausgebildeten Extremwerte und die in Erstreckungsrichtung in zwei hintereinander ausgebildete Tälern ausgebildeten Extremwerte jeweils im Abstand der Länge L₂ mit L₂ < L₁ von einander ausgebildet sind, gemäß den Merkmalen von Anspruch 1 gelöst, bei dem der Feineinschnitt (8) in einem ersten radialen Erstreckungsabschnitt ausgehend von der radial äußeren Oberfläche (14) längs seiner Erstreckung nach radial innen bis in eine Tiefe t₁ bei konstanter Amplitude A₁ mit stetig - insbesondere kontinuierlich -abnehmender Amplitude A₂ ihres Verlaufes ausgebildet ist, wobei die Amplitude A₂ in der radialen Position in der Tiefe t₁ mit A₂ =0mm ausgebildet ist, und bei dem der Feineinschnitt (8) in einem zweiten radialen Erstreckungsabschnitt ausgehend von der radialen Position in der Tiefe t₁ längs seiner Erstreckung nach radial innen bis in eine Tiefe t₂ mit t₂> t₁ bei konstanter Amplitude A₂=0mm mit stetig - insbesondere kontinuierlich -abnehmender Amplitude A₁ ihres Verlaufes ausgebildet ist, wobei die Amplitude A₁ in der radialen Position in der Tiefe t₂ mit A₁ =0mm ausgebildet ist.

Dies ermöglicht es die Vorteile der Ausbildung des Feineinschnitts mit den überlagerten ersten und zweiten Wellen- oder Zickzackformen zu nutzen. Diese Ausbildung ermöglicht es somit, dass auch bei zur Sicherstellung der erforderlichen Steifigkeit beschränkten Zahl von ausgebildeten Feineinschnitten eine sehr hohe wirksame Kantenlänge von Feineinschnitten zum Griff in Umfangs- und in axialer Richtung gewährleistet werden kann. Die überlagerte Ausbildung von einer ersten zick-zack- oder wellenförmiger Feineinschnittskontur mit einer zweiten Zick-Zack oder wellenförmigen Feineinschnittskontur zumindest in einem oder mehreren Erstreckungsbereichen, die jeweils zwischen benachbarten Extremwerten der ersten Wellenform oder Zickzackform ausgebildet sind, wobei die zweite Amplitude A₂ kleiner als die erste Amplitude A₁ und die zweite Länge L₂ kleiner als die erste L₁ ausgebildet ist, bewirkt eine deutliche Erhöhung der durch den jeweiligen Feineinschnitt auf engem Raum erzielbaren Kantenlänge sowohl in Umfangsrichtung als auch in axialer Richtung. Die Überlagerung der beiden Zick-Zack-Formen bzw. Wellenformen bietet aufgrund der gewählten Form der Überlagerung darüber hinaus einen sehr formstabilen Feineinschnitt, der dem übermäßigen Abrieb der in den Extremwerten ausgebildeten Spitzen oder Ecken des Gummimaterials des Profilelementes entgegen wirkt. Die überlagerte Zick-Zack-Formen bzw. Wellenformen ermöglicht eine zusätzlich erhöhte Stützwirkung der durch den Feineinschnitt ausgebildeten korrespondierenden Feineinschnittswände trotz langer wirksamer Griffkanten die Steifigkeit des Profilelementes. Die radial erhabenen Profilelemente können weiterhin mit hoher Steifigkeit ausgebildet werden, ohne die Auslegung des Profils mit zur großen Wasseraufnahme ausgelegten Rillen im Profil zu beeinträchtigen. Auch bei relativ kleinen radial erhabenen Profilelementen kann eine große Griffkantenwirkung ermöglicht werden. Durch die in radialer Richtung R abschnittsweise Reduktion zunächst nur der Amplitude A₂ von der radialen Oberfläche ausgehend bis auf ihren in der Tiefe t₁ erreichten Minimalwert A₂=0 und im Anschluss nur der Amplitude A₁ von der der Tiefe t₁ ausgehend bis auf ihren in der Tiefe t₁ erreichten Minimalwert A₂=0 kann über die Lebensdauer des Reifens die Verzahnung zur Übertragung maximaler Kräften in Umfangs- und in Querrichtung des Reifens auf annähernd gleichem Niveau aufrechterhalten und eine hohe wirksame Griffkantenlänge bereitgestellt werden und dabei dennoch aufgrund der deutlich reduzierten Verschachtelung des Feineinschnittsgestaltung über die Profiltiefe eine bessere Entformbarkeit ermöglicht werden.

Besonders vorteilhaft ist die Ausbildung eines Fahrzeugluftreifens gemäß den Merkmalen von Anspruch 2, wobei der Feineinschnitt (8) in einem dritten radialen Erstreckungsabschnitt ausgehend von der radialen Position in der Tiefe t₂ längs seiner Erstreckung nach radial innen bis in eine Tiefe t₃ mit t₃> t₂ mit konstanter Amplitude A₂=0mm und mit konstanter Amplitude A₁ =0mm ausgebildet ist. Hierdurch wird gerade in dem radial inneren Feineinschnittsabschnitt, in dem die Spannungen im Material ansteigen, beide Amplituden minimiert. Dies ist sehr vorteilhaft zur Vermeidung von Rissbildungen.

Besonders vorteilhaft ist die Ausbildung eines Fahrzeugluftreifens gemäß den Merkmalen von Anspruch 3, wobei die Länge L₁ mit 5mm ≤ L₁ ≤20mm ausgebildet ist. Hierdurch wird eine Verzahnung der durch den Feineinschnitt gebildeten und getrennten Profilelementabschnitten zur Übertragung auch maximaler während des Abrollens des Reifens auftretenden Kräfte ermöglicht.

Besonders vorteilhaft ist die Ausbildung eines Fahrzeugluftreifens gemäß den Merkmalen von Anspruch 4, wobei die Länge L₂ mit 0,5mm ≤ L₂ ≤4mm ausgebildet ist. Hierdurch wird eine Verzahnung der durch den Feineinschnitt gebildeten und getrennten Profilelementabschnitten zur Übertragung der während des Abrollens des Reifens üblicherweise auftretenden Kräfte ermöglicht.

Besonders vorteilhaft ist die Ausbildung eines Fahrzeugluftreifens gemäß den Merkmalen von Anspruch 5, wobei die Amplitude A₁ mit 2,5mm ≤ A₁ ≤ 12mm ausgebildet ist. Hierdurch wird eine Verzahnung der durch den Feineinschnitt gebildeten und getrennten Profilelementabschnitten zur Übertragung auch maximaler während des Abrollens des Reifens auftretenden Kräfte ermöglicht.

Besonders vorteilhaft ist die Ausbildung eines Fahrzeugluftreifens gemäß den Merkmalen von Anspruch 6, wobei die Amplitude A₂ mit 0,25mm ≤ A₁ ≤ 6mm ausgebildet ist.

Hierdurch wird eine Verzahnung der durch den Feineinschnitt gebildeten und getrennten Profilelementabschnitten zur Übertragung der während des Abrollens des Reifens üblicherweise auftretenden Kräfte ermöglicht.

Besonders vorteilhaft ist die Ausbildung eines Fahrzeugluftreifens gemäß den Merkmalen von Anspruch 7, wobei der Feineinschnitt längs seines Feineinschnittgrundes mit einer kanalförmigen Erweiterung ausgebildet ist. Hierdurch kann die Wasserableitung aus dem Profil verbessert und Rissbildungen im Feineinschnittsgrund entgegengewirkt werden.

Besonders vorteilhaft ist die Ausbildung eines Fahrzeugluftreifens gemäß den Merkmalen von Anspruch 8, wobei die erste Wellen- oder Zickzackform eine Zickzackform ist, die sich jeweils zwischen den beiden Extremwerten eines Berges und eines benachbarten Tales geradlinig erstreckt und in den Extremwerten mit einer Knickstelle ausgebildet ist unter Einschluss eines Knickwinkels α₁ mit 90° ≤ α₁≤160°. Hierdurch ist das Profilelement und somit das Laufstreifenprofil ausreichend steif zur Übertragung auch maximaler Kräfte.

Besonders vorteilhaft ist die Ausbildung eines Fahrzeugluftreifens gemäß den Merkmalen von Anspruch 9, wobei die zweite Wellen- oder Zickzackform eine Zickzackform ist, die sich jeweils zwischen den beiden Extremwerten eines Berges und eines benachbarten Tales geradlinig erstreckt und in den Extremwerten mit einer Knickstelle ausgebildet ist unter Einschluss eines Knickwinkels α₂ mit 50° ≤ α₂≤160°. Hierdurch ist das Profilelement und somit das Laufstreifenprofil ausreichend steif zur Übertragung der im Normalbetrieb des Reifens auftretenden Kräfte.

Besonders vorteilhaft zur zusätzlichen einfachen Sicherung einer optimierten hohen Profilelementsteifigkeit bei großer wirksamer Griffkantenlänge ist die Ausbildung eines Fahrzeugluftreifens gemäß den Merkmalen von Anspruch 10, wobei die geradlinige Haupterstreckungsrichtung mit der axialen Richtung A des Fahrzeugluftreifens einen Winkel β mit 35° ≥β≥0° - insbesondere mit 30° ≥β≥20°- einschließt.

Besonders vorteilhaft ist die Ausbildung eines Fahrzeugluftreifens gemäß den Merkmalen von Anspruch 11, wobei die erste Wellen- oder Zickzackform die Nulldurchgangslinie der zweiten Wellen- oder Zickzackform bildet. Hierdurch kann in einfacher Weise eine drehrichtungsunabhängige Ausbildung des Reifens unter Nutzung der Vorteile der ersten Wellen- und Zickzackform umgesetzt werden.

Besonders vorteilhaft ist die Ausbildung eines Fahrzeugluftreifens gemäß den Merkmalen von Anspruch 12, wobei die Nulldurchgangslinie der ersten Wellen- oder Zickzackform auch die Nulldurchgangslinie der zweiten Wellen- oder Zickzackform bildet. Hierdurch kann in einfacher Weise eine drehrichtungsunabhängige Ausbildung des Reifens unter Nutzung der Vorteile der zweiten Wellen- und Zickzackform umgesetzt werden.

Besonders vorteilhaft zur zusätzlichen einfachen Sicherung einer hohen Profilelementsteifigkeit ist die Ausbildung eines Fahrzeugluftreifens gemäß den Merkmalen von Anspruch 13, wobei der Feineinschnitt mit einer längs seiner Erstreckung in der radial äußeren Oberfläche veränderten Tiefe - insbesondere mit einer größeren Tiefe in seinem mittleren Erstreckungsabschnitt als in den diesen mittleren Erstreckungsabschnitt begrenzenden Randerstreckungsabschnitten - ausgebildet ist.

Die Erfindung wird im Folgenden an Hand der in den Figuren 1 bis 11 dargestellten Ausführungsbeispiele näher erläutert. Hierin zeigen
- Fig.1: eine Draufsicht auf die einen Umfangsabschnitt eines Laufstreifenprofils eines Fahrzeugreifens,
- Fig. 2a: den Querschnitt des Laufstreifenprofils von Fig. 1 in Schnittdarstellung gemäß Schnitt IIa-IIa von Fig.1,
- Fig.2b: den Querschnitt des Laufstreifenprofils von Fig. 1 in Schnittdarstellung gemäß Schnitt IIb-IIb von Fig.3,
- Fig. 3: einen vergrößerten Ausschnitt des Laufstreifenprofils von Figur 1 gemäß Ansicht III-III von Fig.2a,
- Fig. 4: einen vergrößerten Ausschnitt des Laufstreifenprofils von Figur 1 gemäß Schnitt IV-IV von Fig.2a zur Erläuterung eines alternativen Ausführungsbeispiels,
- Fig. 5: eine Draufsicht auf einen Umfangsabschnitt eines Laufstreifenprofils eines Fahrzeugreifens mit alternativer Ausbildung der Feineinschnitte,
- Fig. 6: eine Darstellung zur Erläuterung des Feineinschnittsverlaufs durch Superposition zweier Wellenformen,
- Fig. 7: das Laufstreifenprofils in Darstellung von Fig.3 mit alternativer Ausbildung des Feineinschnittgrundes,
- Fig. 8: den Querschnitt des Laufstreifenprofils von Fig. 7 in Schnittdarstellung gemäß Schnitt VIII-VIII von Fig.7
- Fig. 9: eine Perspektivische Darstellung des Feineinschnitts vonFig.2 in alternativer Ausbildung,
- Fig.10: einen vergrößerten Ausschnitt des Laufstreifenprofils von Figur 1 gemäß Schnitt X-X von Fig.2a zur Erläuterung eines weiteren alternativen Ausführungsbeispiels,
- Fig.11: das Laufstreifenprofil von Fig.1 in Draufsicht mit alternativer Ausbildung.

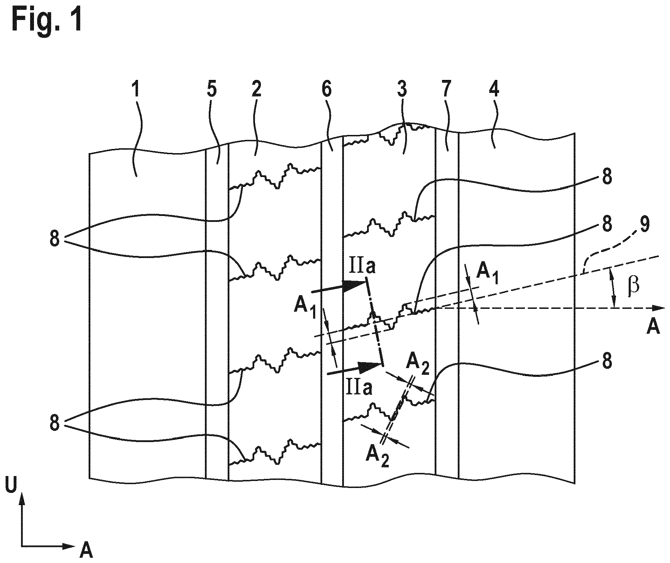

Die Figuren 1 bis 4 zeigen einen Umfangsabschnitt eines Laufstreifenprofils eines Pkw-Reifens mit in axialer Richtung A nebeneinander angeordneten Umfangsrippen 1, 2, 3 und 4, die jeweils durch Umfangsrillen 5, 6 bzw. 7 voneinander beabstandet sind. Die Umfangsrille 1 bildet dabei die in Fig. 1 auf der linken Seite ausgebildete Schulterrippe. Die Umfangsrippe 4 bildet die in Fig. 1 auf der rechten Seite dargestellte Schulterrippe. Die Umfangsrippen 1,2, 3 und 4 sind dabei über den gesamten Umfang des Fahrzeugluftreifens erstreckt und in Umfangsrichtung U ausgerichtet. Die Umfangsrillen 5, 6 und 7 sind ebenfalls über den gesamten Umfang des Fahrzeugluftreifens erstreckt und in Umfangsrichtung U des Fahrzeugluftreifens ausgerichtet. Die Umfangsrille 5 trennt dabei in axialer Richtung A die Umfangsrippe 1 und die Umfangsrille 2. Die Umfangsrille 6 trennt in axialer Richtung A des Fahrzeugluftreifens die Umfangsrippe 2 und die Umfangsrippe 3 voneinander. Die Umfangsrille 7 trennt in axialer Richtung A die Umfangsrippe 3 und die Umfangsrippe 4 voneinander.

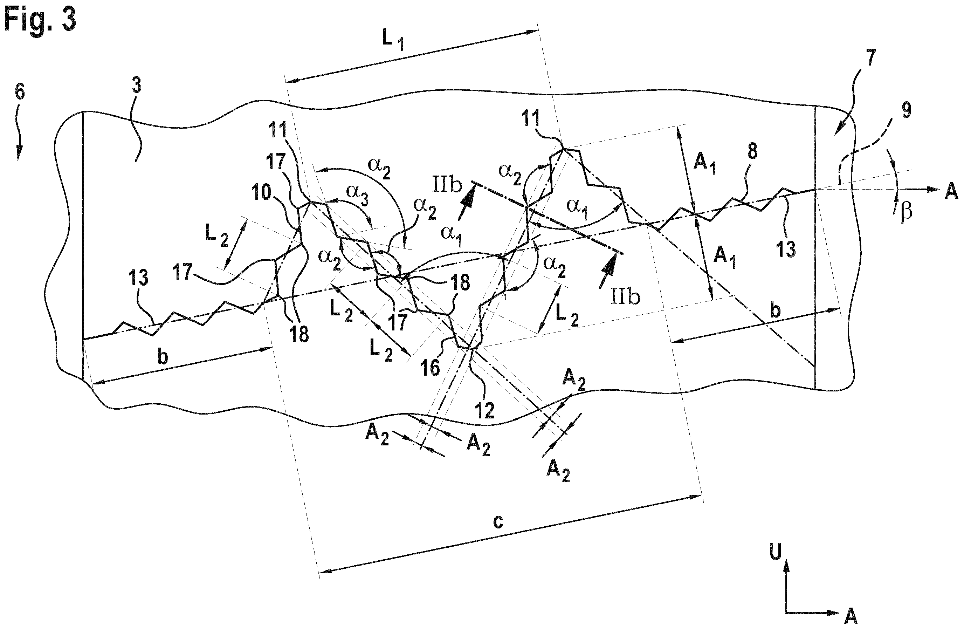

Die Umfangsrippen 2 und 3 sind - wie in den Figuren 1 und 3 dargestellt ist - mit über den Umfang des Fahrzeugluftreifens verteilt ausgebildeten Feineinschnitten 8 ausgebildet, die sich dabei über den gesamten in axialer Richtung A des Fahrzeugluftreifens ausgebildeten Erstreckungsbereich der jeweiligen Umfangsrippe 2 bzw. 3 erstrecken. Die in der Umfangsrippe 2 ausgebildeten Feineinschnitte 8 erstrecken sich dabei ausgehend von der Umfangsrille 5 bis in die Umfangsrille 6 hinein. Die in der Umfangsrippe 3 ausgebildeten Feineinschnitte 8 erstrecken sich von der Umfangsrille 6 bis in die Umfangsrille 7 hinein. Die Feineinschnitte 8 erstrecken sich dabei jeweils in der radial äußeren Oberfläche 14 der Umfangsrippe 2 bzw. 3 längs einer geradlinig unter Einschluss eines Winkels β zur axialen Richtung A ausgerichteten Haupterstreckungsrichtung 9. Der Winkel β ist dabei mit β ≤ 35°, beispielsweise mit β = 29° ausgebildet.

Im Folgenden wird die Ausbildung der Feineinschnitte an Hand eines in der Umfangsrippe 3 ausgebildeten Feineinschnittes beispielhaft erläutert. Wie Fig. 3 dargestellt ist, erstreckt sich der Feineinschnitt 8 dabei längs seiner axialen Erstreckung ausgehend von der einen die Umfangsrippe 3 begrenzenden Umfangsrille 6 bis zur anderen die Umfangsrippe 3 begrenzenden Umfangsrille 7 zunächst über einen ersten axialen Randerstreckungsbereich 13 der Erstreckungslänge b, dann über einen sich anschließenden axialen Haupterstreckungsbereich der Erstreckungslänge c und dann über einen zweiten sich an den Haupterstreckungsbereich anschließenden axialen Randerstreckungsbereich 13 der Erstreckungslänge b bis zur Umfangsrille 7.

Im Haupterstreckungsbereich der Erstreckungslänge c mit c ≥ 2b ist der Feineinschnitt 8 längs der Haupterstreckungsrichtung 9 längs einer Zick-Zack-Linie 10 ausgebildet, deren Nulldurchgangslinie die Haupterstreckungsrichtung 9 bildet. Die Zick-Zack-Linie 10 bildet mit ihrem Verlauf längs entlang der Haupterstreckungsrichtung 9 in alternierender Reihenfolge Berge mit einem Maximalwert 11 und Täler mit einem Maximalwert 12. Die Zick-Zack-Linie 10 ist in Fig.3 mit gestrichelter Linie dargestellt. Dabei ist der Abstand der Maxima 11 von der Nulldurchgangslinie 9 und der Abstand der Minima 12 von der Nulldurchgangslinie 9 jeweils als die Amplitude A₁ der Zick-Zack-Linie 10 dargestellt. Der Abstand zweier längs der Haupterstreckungsrichtung 9 hintereinander ausgebildeter Maxima 11 ist dabei mit der Länge L₁ ausgebildet. Der Abstand zwischen zwei längs der Haupterstreckungsrichtung 9 hintereinander ausgebildeter Minima 12 ist dabei ebenfalls jeweils mit der Länge L₁ ausgebildet. In dem in Fig. 3 dargestellten Ausführungsbeispiel ist lediglich ein Minimum 12 dargestellt. Der Abstand zwischen Minimum 12 und den beiden benachbarten Maxima 11 ist jeweils mit 0,5L₁ ausgebildet. Die Zick-Zack-Linie 10 verläuft im Erstreckungsbereich c zwischen benachbarten Extremwerten geradlinig unter Bildung einer Knickstelle im Maximum 11 bzw. im Minimum 12. Dabei schließt die Zick-Zack-Linie 10 jeweils in ihrer in Fig.3 von links nach rechts längs der Haupterstreckungsrichtung 9 gerichteten Erstreckung mit ihrem zum jeweiligen Maximum 11 hinweisenden geradlinigen Abschnitt und dem vom Maximum 11 zum nächsten Minimum hinweisenden Abschnitt auf der zur Nulldurchgangslinie 9 hinweisenden Seite einen Knickwinkel α₁ ein. Ebenso schließt der vom Maximum 11 zum Minimum 12 weisende geradlinige Abschnitt mit dem im Anschluss vom Minimum 12 zum nächsten Maximum 11 hinweisenden geradlinigen Erstreckungsabschnitt der Zick-Zack-Linie 10 auf der zur Nulldurchgangslinie weisenden Seite des Minimums 12 einen Knickwinkel α₁ ein. Der Knickwinkel α₁ ist dabei mit 90° ≤ α₁ ≤ 160° ausgebildet. Beispielsweise ist α₁ = 80°.

Die Länge L₁ ist mit 5mm ≤ L₁ ≤ 20mm ausgebildet. Beispielsweise ist L₁ = 15mm ausgebildet. Die Amplitude A₁ ist mit 2,5 mm ≤ A₁ ≤ 12mm ausgebildet. Beispielsweise ist A₁ = 8mm ausgebildet.

Im Erstreckungsbereich der Länge c ist der Feineinschnitt 8 längs einer um die Zick-Zack-Linie 10 zickzackförmig verlaufenden Zick-Zack-Linie 16 ausgebildet. Dabei bildet die Zickzacklinie 10 die Nulldurchgangslinie der Zick-Zack-Linie 16. Die Zickzacklinie 16 erstreckt sich längs der diese Nulldurchgangslinie bildenden Zickzacklinie 10 zick-zacklinienförmig und bildet dabei auf der einen Seite der Zickzacklinie 10 Berge mit Maxima 17 und auf der anderen Täler mit Minima 18. Die Berge 17 und Täler 18 sind dabei längs der Erstreckung der Zick-Zack-Linie 10 ausgehend vom linken Übergang vom Erstreckungsbereich 13 in den Haupterstreckungsbereich der Länge c bis zum ersten Maximum 11 und ebenso im Erstreckungsbereich zwischen dem Maximum 11 und dem nächsten Minimum 12 und ebenso im Erstreckungsbereich zwischen dem Minimum 12 und dem nächsten Maximum 11 und zwischen diesem Maximum 11 und dem Übergang zum rechten Erstreckungsbereich 13 ausgebildet. Der Abstand zwischen zwei in einem geradlinigen Erstreckungsabschnitt der Zick-Zack-Linie 16 ausgebildeten hintereinander folgenden Minima 18 ist dabei mit der Länge L₂ ausgebildet. Der Abstand von in einem geradlinigen Erstreckungsabschnitt der Zickzacklinien 16 hintereinander ausgebildeten Maxima 17 ist mit der Erstreckungslänge L₂ ausgebildet. Der Abstand von in einem geradlinigen Erstreckungsabschnitt der Zickzacklinien 16 hintereinander benachbart angeordnetem Maximum 17 und Minimum 18 ist jeweils mit 0,5L₂ ausgebildet. Der Abstand der Maxima 17 vom jeweils korrespondierenden geradlinigen Abschnitt der die zweite Nulldurchgangsline bildenden Zick-Zack-Linie 10 ist ebenso wie der Abstand der Minima 18 vom jeweils korrespondierenden geradlinigen Abschnitt der die zweite Nulldurchgangslinie bildenden Zick-Zack-Form 10 als Amplitude A₂ ausgebildet. Der Feineinschnitt 8 ist in der Profilrippe 3in seinem Erstreckungsverlauf im Erstreckungsabschnitt der Länge c durch Überlagerung von zwei Zick-Zack-formen 10 und 16 gebildeten Zickzackkontur 16 ausgebildet.

Die Erstreckungslänge L₂ ist mit 0,5 mm ≤ L₂ ≤ 4mm - beispielsweise mit L₂ = 4mm - ausgebildet. Die Amplitude A₂ ist mit 0,25 mm ≤ A₂ ≤ 6mm - beispielsweise A₂ = 2mm - ausgebildet.

Die Längen L₂ und L₁ sind mit L₂ ≥ 2 L₁ und die Amplituden A₂ und A₁ sind mit A₁ ≥ 2 A₂ ausgebildet.

Der Winkel α₂ ist mit 50° ≤ α₂ ≤ 160°. Beispielsweise ist α₂ = 100°.

Im dargestellten Ausführungsbeispiel ist im Randerstreckungsbereich 13 der Erstreckungslänge b ist keine Zick-Zack-Form 10 ausgebildet und der Feineinschnitt 8 ist lediglich aus einer um die die Nulldurchgangslinie bildenden Haupterstreckungsrichtung 9 zickzackförmig erstreckt ausgebildeten Zick-Zack-Form 16 ausgebildet.

In einem weiteren Ausführungsbeispiel geht der Feineinschnitt 8 innerhalb des Erstreckungsbereichs der Erstreckungslänge b im unmittelbaren Übergang zur benachbarten Umfangsrille 6 bzw. zur benachbarten Umfangsrille 7 geradlinig in Haupterstreckungsrichtung 9 verlaufend in die Umfangsrille 6 bzw. 7 über.

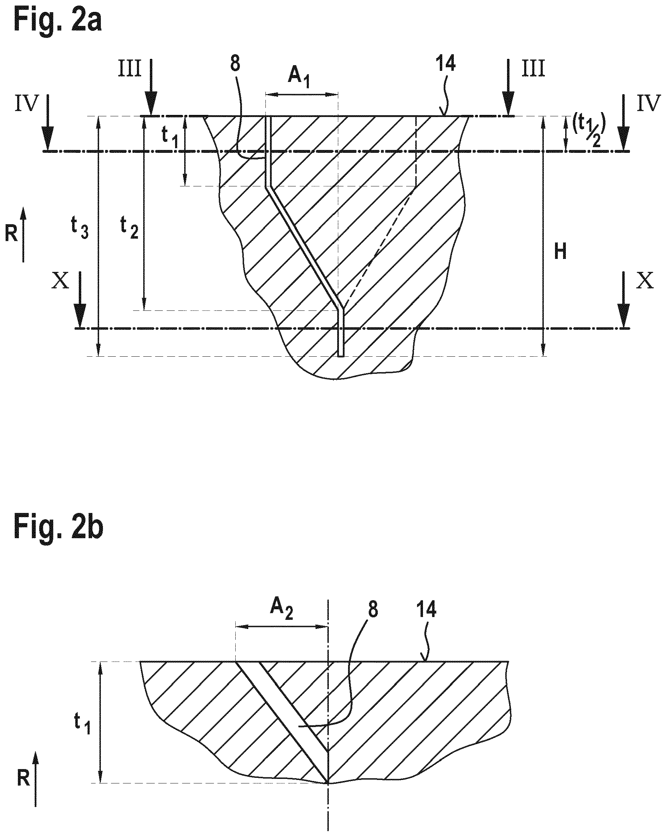

Wie in Fig.2a und Fig.2b dargestellt ist, ist der Feineinschnitt 8 derart ausgebildet, dass längs seiner radialen Erstreckung im Reifen in einem ersten radialen Erstreckungsabschnitt ausgehend von der radial äußeren, die Bodenkontaktoberfläche bildenden Oberfläche 14 der Umfangsrippe 3 nach radial innen hin bis in eine Tiefe t₁ bei konstanter Amplitude A₁ die Amplitude A₂ kontinuierlich abnimmt. In der radialen Position des Reifens in der Tiefe t₁ ist die Amplitude A₂ mit A₂ = 0mm ausgebildet. In diesem radialen Erstreckungsbereich ist der Feineinschnitt 8 jeweils längs seiner radialen Erstreckung im Reifen in allen parallel zur radial äußeren Oberfläche der Profilrippe 3 gebildeten Ebenen mit dem in Fig. 3 dargestellten Verlauf ausgebildet, d.h. in allen radialen Ebenen ist der Verlauf des Feineinschnitts 8 aus der Überlagerung der beiden Zick-Zack-Formen jedoch mit abnehmender Amplitude A₂ ausgebildet.

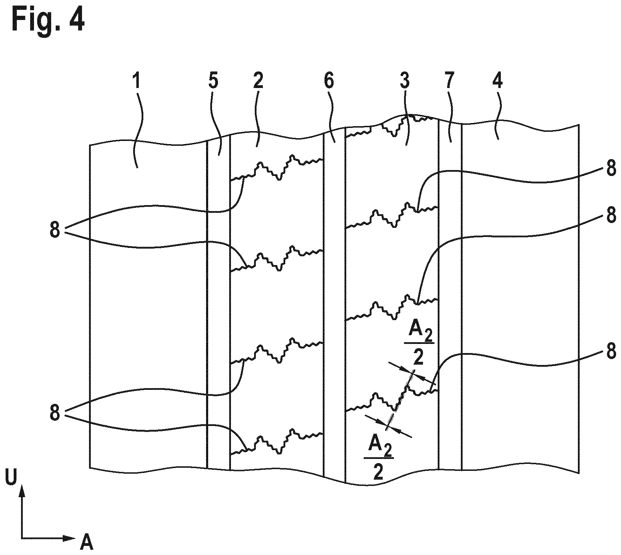

Fig. 4 zeigt die radiale Schnittebene im Abstand (0,5 t₂) von der radial äußeren Oberfläche 14 der Fig. 2b. Die Amplitude A₂ ist in dieser Schnittebene kleiner als in Fig.1.

Wie in Fig.2a und Fig.2b dargestellt ist, nimmt in einem zweiten radialen Erstreckungsabschnitt nimmt ausgehend von der radialen Position des Reifens in der Tiefe t₁ nach radial innen hin bis in eine Tiefe t₂ mit t₂ > t₁ bei konstanter Amplitude A₂ = 0mm die Amplitude A₁ kontinuierlich abnimmt. In diesem radialen Erstreckungsbereich ist der Feineinschnitt 8 jeweils längs seiner radialen Erstreckung im Reifen in allen parallel zur radial äußeren Oberfläche der Profilrippe 3 gebildeten Ebenen lediglich mit Zickzackform 10 ohne Überlagerung der Zickzackform 16, jedoch mit abnehmender Amplitude A₁ ausgebildet. In der radialen Position des Reifens in der Tiefe t₂ ist auch die Amplitude A₂ mit A₂ = 0mm ausgebildet. In dieser radialen Position erreicht der Feineinschnitt 8 einen geradlinigen Verlauf.

Wie in Fig.2a und Fig.2b dargestellt ist, ist in einem dritten radialen Erstreckungsabschnitt, welcher sich ausgehend von der radialen Position des Reifens in der Tiefe t₂ nach radial innen hin bis in eine Tiefe t₃ mit t₃ > t₂ erstreckt A₁ = A₂ = 0mm ausgebildet. In allen dieser radialen Position erreicht der Feineinschnitt 8 einen geradlinigen Verlauf. In diesem radialen Erstreckungsbereich ist der Feineinschnitt 8 jeweils längs seiner radialen Erstreckung im Reifen in allen parallel zur radial äußeren Oberfläche der Profilrippe 3 gebildeten Ebenen geradlinig verlaufend ausgebildet.

Die Tiefen t₁, t₂ und t₃ sind mit 0,9t₃≤ t₂≤0,7 t₃, (1/3) t₂≤ t₁≤(2/3) t₂ ausgebildet.

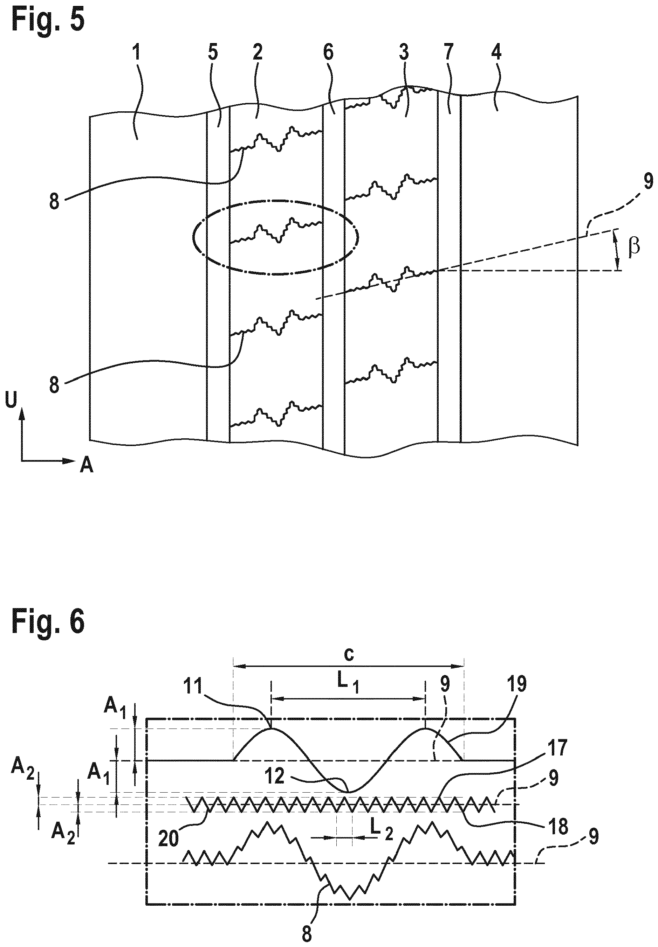

Fig.5 und Fig.6 zeigen ein alternatives Ausführungsbeispiel der Ausbildung des Feineinschnittes 8. Der Feineinschnitt 8 ist dabei im Erstreckungsbereich der Erstreckungsbreite c in seinem Verlauf durch Superposition bzw. Überlagerung einer ersten in der Haupterstreckungsrichtung 9 verlaufenden Wellenlinienform 19 und einer zweiten um die Haupterstreckungsrichtung 9 längs der Haupterstreckungsrichtung 9 verlaufenden Wellenlinie 20 gebildet. Die in Haupterstreckungsrichtung 9 gerichtete die Nulldurchgangslinie bildende Gerade 9 ist sowohl die Nulldurchgangslinie 9 der ersten Wellenlinie 19 als auch die Nulldurchgangslinie der zweiten Wellenlinie 20. Die Wellenform der Wellenlinie 19 ist mit den Maximalwerten 11 und den Minimalwerten 12, den Amplituden A₁, welche den Abstand der Maxima 11 von der Nulldurchgangslinie 9 und den Abstand der Minima 12 von der Nulldurchgangslinie 9 darstellen, sowie mit einer Wellenlänge L₁ ausgebildet. Die Wellenform der zweiten Wellenlinie 20 ist mit den Maximalwerten 17 und den Minimalwerten 18 sowie mit den Amplituden A₂ ausgebildet, welche den Abstand der Maximalwerte 17 von der Nulldurchgangslinie 9 und den Abstand der Minimalwerte 18 von der Nulldurchgangslinie 9 bilden, sowie mit einer Wellenlänge L₂ ausgebildet. Für die Werte L₁ und L₂ sowie A₁ und A₂ gelten die bereits oben im Zusammenhang mit den zick-zack-förmigen Ausbildungen gemachten Angaben.

In Fig. 6 zeigt die obere grafische Darstellung den prinzipiellen Wellenformverlauf der Wellenlinie 19, die mittlere grafische Darstellung den prinzipiellen Wellenformverlauf der zweiten Wellenlinie 20 und die untere grafische Darstellung den durch Überlagerung der Wellenform 9 mit der Wellenform 10 gebildeten Verlauf des Feineinschnittes 8 längs der Haupterstreckungsrichtung 9 durch die radial äußere Oberfläche 14 der Profilrippe 3 bzw. 2.

In den Randerstreckungsabschnitten 13 ist der Feineinschnitt 8 lediglich durch die Wellenform der zweiten Linie 20 bestimmt. Auch in diesem Ausführungsbeispiel ist der unmittelbare Übergang zur Umfangsrille jeweils geradlinig ausgebildet.

Wird die Haupterstreckungslinie der die Haupterstreckungsrichtung 9 bildenden Gerade als X-Achse und die senkrecht hierzu verlaufende Richtung als Y-Achse definiert. Dann folgt der Wellenverlauf der Wellenform 19 der Funktion F₁₉(x) = A₁ sin(2π(x/L₁)+ δ₁) und die Wellenform 20 der Funktion F₂₀(x) = A₂ sin(2π (x/L₂)+ δ₂). Die Wellenform des Verlauf des Feineinschnitts 8 im Erstreckungsbereich der Länge c lässt sich dann mit F(x) = A₁ sin(2π(x/L)+ δ₁) + A₂ sin(2π (x/L₂)+ δ₂) beschreiben, wobei δ₁ und δ₂ jeweils einen Phasenversatz angeben.

In anderer - nicht dargestellter - Ausführung ist die Wellenform der zweiten Wellenlinie 20 nicht - wie in Fig. 5 und 6 dargestellt und erläutert - um die geradlinige, die Haupterstreckungsrichtung 9 bildende Nulldurchgangslinie der ersten Wellenlinie 19 herum wellenförmig verlaufend ausgebildet, sondern jeweils im Erstreckungsbereich zwischen zwei benachbarten Extremwerten 11 und 12 der ersten Wellenform 19 mit der wellenförmig gekrümmten Verlaufslinie der Wellenform 19 als Nulldurchgangslinie der Wellenlinie 20.

Wie im Zusammenhang mit den zu den in den Figuren 1 bis 4 dargestellten Ausführungsbeispielen gemachten Erläuterungen ist in einem Ausführungsbeispiel des in Fig. 5 und 6 dargestellten Feineinschnitts 8 der Feineinschnitt 8 durch Superposition von zwei Wellenformen mit gleicher Nulldurchgangslinie 9 gebildet und in einem anderen Ausführungsbeispiel durch Superposition, bei der die zweite Wellenform 20 mit der ersten Wellenform 19 als Nulldurchgangslinie ausgebildet ist.

In analoger Weise - wie im Zusammenhang mit dem Feineinschnitt 8 mit überlagerten Zickzackformen in Fig.2a und Fig.2b dargestellt ist - ist der Feineinschnitt 8 derart ausgebildet, dass längs seiner radialen Erstreckung im Reifen in einem ersten radialen Erstreckungsabschnitt ausgehend von der radial äußeren, die Bodenkontaktoberfläche bildenden Oberfläche 14 der Umfangsrippe 3 nach radial innen hin bis in eine Tiefe t₁ bei konstanter Amplitude A₁ die Amplitude A₂ kontinuierlich abnimmt. In der radialen Position des Reifens in der Tiefe t₁ ist die Amplitude A₂ mit A₂ = 0mm ausgebildet. In diesem radialen Erstreckungsbereich ist der Feineinschnitt 8 jeweils längs seiner radialen Erstreckung im Reifen in allen parallel zur radial äußeren Oberfläche der Profilrippe 3 gebildeten Ebenen mit dem aus den beiden Wellenformen überlagerten Verlauf ausgebildet, d.h. in allen radialen Ebenen ist der Verlauf des Feineinschnitts 8 aus der Überlagerung der beiden Wellen-Formen jedoch mit abnehmender Amplitude A₂ ausgebildet. Ebenso nimmt in einem zweiten radialen Erstreckungsabschnitt ausgehend von der radialen Position des Reifens in der Tiefe t₁ nach radial innen hin bis in eine Tiefe t₂ mit t₂ > t₁ bei konstanter Amplitude A₂ = 0mm die Amplitude A₁ kontinuierlich ab. Im zweiten radialen Erstreckungsbereich ist der Feineinschnitt 8 jeweils längs seiner radialen Erstreckung im Reifen in allen parallel zur radial äußeren Oberfläche der Profilrippe 3 gebildeten Ebenen lediglich mit der Wellenform 19 ohne Überlagerung der Wellenform 20, jedoch mit abnehmender Amplitude A₁ ausgebildet. In der radialen Position des Reifens in der Tiefe t₂ ist auch die Amplitude A₂ mit A₂ = 0mm ausgebildet. In dieser radialen Position erreicht der Feineinschnitt 8 einen geradlinigen Verlauf. Ebenso ist in einem dritten radialen Erstreckungsabschnitt, welcher sich ausgehend von der radialen Position des Reifens in der Tiefe t₂ nach radial innen hin bis in eine Tiefe t₃ mit t₃ > t₂ erstreckt A₁ = A₂ = 0mm ausgebildet. In allen dieser radialen Position erreicht der Feineinschnitt 8 einen geradlinigen Verlauf. In diesem radialen Erstreckungsbereich ist der Feineinschnitt 8 jeweils längs seiner radialen Erstreckung im Reifen in allen parallel zur radial äußeren Oberfläche der Profilrippe 3 gebildeten Ebenen geradlinig verlaufend ausgebildet.

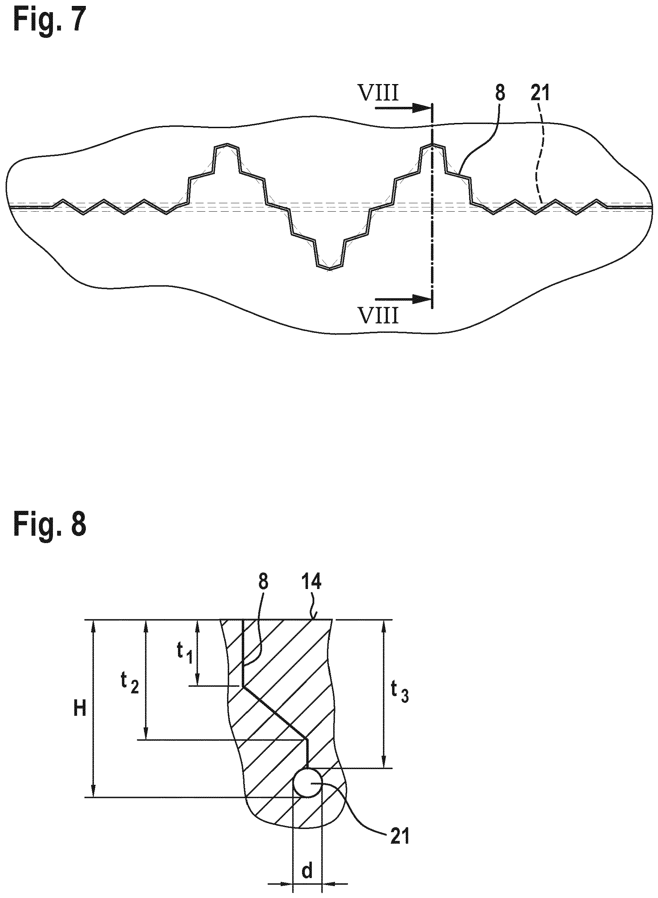

Die Figuren 7 und 8 zeigen ein Ausführungsbeispiel des Feineinschnittes 8 von Fig. 3, wobei im Feineinschnittgrund 15 im Abstand t₃ von der radial äußeren Oberfläche 14 eine zusätzliche kanalförmige Erweiterung 21 ausgebildet ist, die sich längs des Feineinschnittes 8 dem geradlinige Verlauf des dritten radialen Erstreckungsabschnitt folgend erstreckt. Die kanalförmige Erweiterung 21 ist mit einem im Querschnitt kreisförmigen Öffnungsquerschnitt des Durchmessers d ausgebildet. Der Durchmesser d ist dabei mindestens doppelt so groß wie die Breite des Feineinschnitts 8 an der radial äußeren Oberfläche 14.

In Ausführungsbeispielen ohne kanalförmige Erweiterung 21 ist die Feineinschnittstiefe H, die den in radialer Richtung R gemessenen Abstand zwischen radial äußerer Oberfläche und Feinenschnittsgrund 15 angibt, mit H=t₃ ausgebildet. In Erstreckungsabschnitten eines Feineinschnitts, in welchen zusätzlich eine kanalförmige Erweiterung 21 ausgebildet ist, ist die Feineinschnittstiefe H aus der Summe von t₃ und der in radialer Richtung gemessenen Erstreckungshöhe der kanalförmige Erweiterung 21 gebildet.

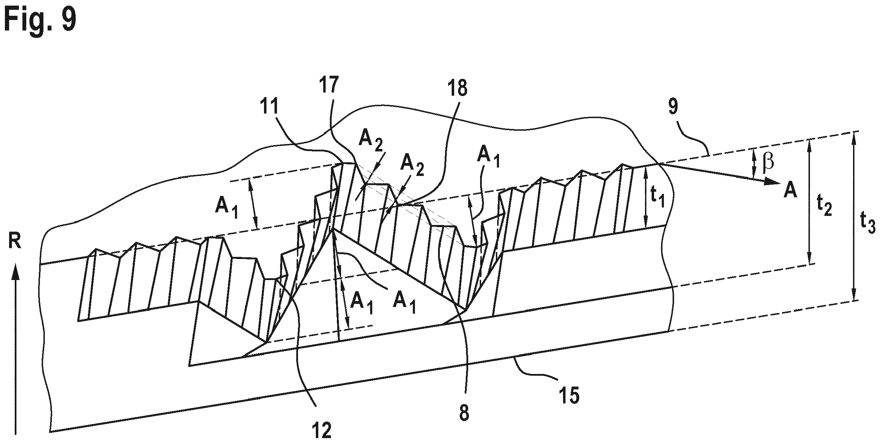

Figur 9 zeigt die perspektivische Sicht auf einen Feineinschnitt 8 im Erstreckungsbereich c mit längs der radialen Erstreckung nach innen in einem ersten radialen Erstreckungsabschnitt abnehmender Amplitude A₂ bei konstanter Amplitude A₁, in einem zweiten radialen Erstreckungsabschnitt abnehmender Amplitude A₁ und in einem dritten radialen Erstreckungsabschnitt bis zum Feineinschnittgrund 15 geradliniger Ausbildung mit A₂ = A₁ = 0 ausgebildet ist.

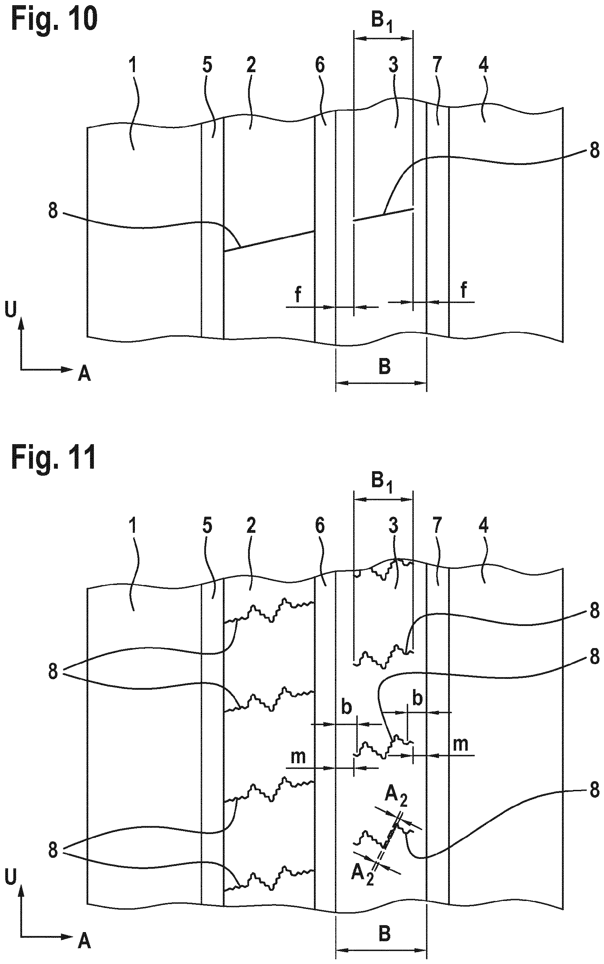

In einem weiteren Ausführungsbeispiel sind die in einer Umfangsrippe 2 bzw. 3 ausgebildeten Feineinschnitte 8 längs ihrer Erstreckung von Umfangsrille zu Umfangsrille mit einer sich längs der Erstreckung des Feineinschnittes 8 veränderter Tiefe t₃ ausgebildet. Beispielsweise ist - wie in Fig.10 am Beispiel von in Fig.1 und Fig.2 in der Umfangrippe 3 ausgebildeten Feineinschnitt 8 dargestellt ist - in dem unmittelbar an die Umfangsrille 6 anschließenden Erstreckungsabschnitt eines Feineinschnittes 8 der in axialer Richtung A gemessenen Erstreckungslänge f und in dem unmittelbar an die Umfangsrille 7 anschließenden Erstreckungsabschnitt des Feineinschnittes 8 der in axialer Richtung A gemessenen Erstreckungslänge f mit einer geringeren Tiefe ausgebildet als der zwischen diesen beiden Randabschnitten ausgebildete Erstreckungsabschnitt des Feineinschnittes 8. Beispielsweise ist die Tiefe in diesen Randabschnitten mit 0,8H ausgebildet, wobei H die in radialer Richtung R gemessene Tiefe des Feineinschnitts 8 in dem zwischen den beiden Randabschnitten ausgebildeten mittleren Erstreckungsabschnitt des Feineinschnittes 8 bildet. Fig. 10 zeigt eine derartige Ausbildung in einer radialen Schnittebene im Abstand 0,9H von der radial äußeren Oberfläche 14 der Fig. 2.

Fig. 11 zeigt ein Ausführungsbeispiel einer Rippe 3, bei der der Feineinschnitt 8 - anders als bei dem in Figur 1 dargestellten Ausführungsbeispiel in der radial äußeren Oberfläche 14 lediglich längs der axialen Erstreckung B₁ ausgebildet ist mit 0,5B≤ B₁≤ 0,75B, wobei B die in der radial äußeren Oberfläche der Umfangsrippe 3 gemessene Breite der Umfangsrippe ist. Beispielsweise ist B₁ mit B₁=0,7B ausgebildet. Im dargestellten Ausführungsbeispiel ist zwischen Umfangsrille 6 und Feineinschnitt 8, sowie zwischen Umfangsrille 7 und Feineinschnitt 8 jeweils ein axialer Abstand m ausgebildet.

Die Ausbildung von Rippen mit Feineinschnitten 8 wurde oben im Zusammenhang mit der Umfangsrippe 4 beschrieben. Eine derartige Ausbildung von Rippen mit Feineinschnitten 8 ist - wie dargestellt - in einer Ausführung mit Rippen im axial mittleren Erstreckungsabschnitt möglich. In anderer - nicht dargestellter - Ausführung werden Rippen der Reifenschulter mit derartigen Feineinschnitten 8 ausgebildet. In weiterer - - nicht dargestellter - Ausführung werden Rippen der Reifenschulter sowie Rippen aus dem mittleren axialen Erstreckungsabschnitt des Reifenprofils mit derartigen Feineinschnitten 8 ausgebildet.

### Bezugszeichenliste

- 1: Schulterrippe
- 2: Umfangsrippe
- 3: Umfangsrippe
- 4: Schulterrippe
- 5: Umfangsrille
- 6: Umfangsrille
- 7: Umfangsrille
- 8: Feineinschnitt
- 9: in Haupterstreckungsrichtung ausgerichtete Nulldurchgangslinie
- 10: Zickzacklinie
- 11: Maximum
- 12: Minimum
- 13: Randerstreckungsabschnitt
- 14: Radial äußere Oberfläche
- 15: Grund des Feineinschnitts
- 16: Zickzacklinie
- 17: Maximum
- 18: Minimum
- 19: Erste Wellenlinie
- 20: Zweite Wellenlinie
- 21: Kanalförmige Erweiterung

## Patentansprüche

1. Laufstreifenprofil eines Fahrzeugluftreifens mit radial erhabenen, von Rillen (5,6,7) oder Nuten begrenzten Profilelementen (2,3), mit in der radial äußeren Oberfläche (14) von radial erhabenen Profilelementen ausgebildeten Feineinschnitten (8) mit geradliniger Haupterstreckungsrichtung (9), welche zumindest in einem Abschnitt (c) ihrer Erstreckung in der radial äußeren Oberfläche (14) längs ihrer Erstreckung jeweils mit einem Verlauf ausgebildet sind mit einer längs der Haupterstreckungsrichtung (9) ausgerichteten ersten Wellen- oder Zickzackform (10,19) mit in Haupterstreckungsrichtung ausgerichteter erster Nulldurchgangslinie (9), wobei die Wellen- oder Zickzackform (10,19) in Bezug auf die Nulldurchgangslinie (9) längs der Haupterstreckung alternierend ausgebildete Berge und Täler definiert, mit einer Amplitude A₁, welche den Abstand der Extremwerte (11,12) der Wellen- oder Zickzackform (10,19) von der ersten Nulldurchgangslinie (9) bildet, wobei die in Haupterstreckungsrichtung in zwei hintereinander ausgebildete Bergen ausgebildeten Extremwerte (11) und die in Haupterstreckungsrichtung in zwei hintereinander ausgebildete Tälern ausgebildeten Extremwerten (12) jeweils im Abstand der Länge L₁ von einander ausgebildet sind,
wobei der Feineinschnitt (8) zumindest in einem Erstreckungsbereich zwischen dem in einem Berg ausgebildeten Extremwert (11) und dem in einem benachbarten Tal ausgebildeten Extremwert (12) der ersten Wellen- oder Zickzackform (10,19) mit einem durch Überlagerung der ersten Wellen- oder Zickzackform (10,19) mit einer zweiten Wellen- oder Zickzackform (16,20) gebildeten Verlauf ausgebildet ist, wobei die zweite Wellen- oder Zickzackform (16,20) längs ihrer Erstreckung alternierend ausgebildete Berge und Täler ihres Verlaufs definieren, mit einer Amplitude A₂ mit A₂< A₁, welche den Abstand der Extremwerte (17,18) der zweiten Wellen- oder Zickzackform (16,20) von der Nulldurchgangslinie der zweiten Wellen- oder Zickzackform (16,20) bildet, wobei die in Erstreckungsrichtung in zwei hintereinander ausgebildete Bergen ausgebildeten Extremwerten (17) und die in Erstreckungsrichtung in zwei hintereinander ausgebildete Tälern ausgebildeten Extremwerten (18) jeweils im Abstand der Länge L₂ mit L₂ < L₁ von einander ausgebildet sind,
**dadurch gekennzeichnet,**
**dass** der Feineinschnitt (8) in einem ersten radialen Erstreckungsabschnitt ausgehend von der radial äußeren Oberfläche (14) längs seiner Erstreckung nach radial innen bis in eine Tiefe t₁ bei konstanter Amplitude A₁ mit stetig - insbesondere kontinuierlich -abnehmender Amplitude A₂ ihres Verlaufes ausgebildet ist, wobei die Amplitude A₂ in der radialen Position in der Tiefe t₁ mit A₂ =0mm ausgebildet ist,
**dass** der Feineinschnitt (8) in einem zweiten radialen Erstreckungsabschnitt ausgehend von der radialen Position in der Tiefe t₁ längs seiner Erstreckung nach radial innen bis in eine Tiefe t₂ mit t₂> t₁ bei konstanter Amplitude A₂=0mm mit stetig - insbesondere kontinuierlich -abnehmender Amplitude A₁ ihres Verlaufes ausgebildet ist, wobei die Amplitude A₁ in der radialen Position in der Tiefe t₂ mit A₁ =0mm ausgebildet ist.

2. Laufstreifenprofil gemäß den Merkmalen von Anspruch 1,
wobei der Feineinschnitt (8) in einem dritten radialen Erstreckungsabschnitt ausgehend von der radialen Position in der Tiefe t₂ längs seiner Erstreckung nach radial innen bis in eine Tiefe t₃ mit t₃> t₂ mit konstanter Amplitude A₂ =0mm und mit konstanter Amplitude A₁ =0mm ausgebildet ist.

3. Laufstreifenprofil gemäß den Merkmalen von Anspruch 1 oder 2,
wobei die Länge L₁ mit 5mm ≤ L₁ ≤20mm ausgebildet ist.

4. Laufstreifenprofil gemäß den Merkmalen von einem oder mehreren der vorangegangenen Ansprüche,
wobei die Länge L₂ mit 0,5mm ≤ L₂ ≤4mm ausgebildet ist.

5. Laufstreifenprofil gemäß den Merkmalen von einem oder mehreren der vorangegangenen Ansprüche,
wobei die Amplitude A₁ der Feineinschnitte (8) an der radial äußeren Oberfläche (14) mit 2,5mm ≤ A₁≤ 12mm ausgebildet ist.

6. Laufstreifenprofil gemäß den Merkmalen von einem oder mehreren der vorangegangenen Ansprüche,
wobei die Amplitude A₂ der Feineinschnitte (8) an der radial äußeren Oberfläche (14) mit 0,25mm ≤ A₂ ≤ 6mm ausgebildet ist.

7. Laufstreifenprofil gemäß den Merkmalen von einem oder mehreren der vorangegangenen Ansprüche,
wobei der Feineinschnitt (8) längs seines Feineinschnittgrundes (15) mit einer kanalförmigen Erweiterung (21) ausgebildet ist.

8. Laufstreifenprofil gemäß den Merkmalen von einem oder mehreren der vorangegangenen Ansprüche,
wobei die erste Wellen- oder Zickzackform eine Zickzackform (10) ist, die sich jeweils zwischen den beiden Extremwerten (11) eines Berges und eines benachbarten Tales (12) geradlinig erstreckt und in den Extremwerten (11,12) mit einer Knickstelle ausgebildet ist unter Einschluss eines Knickwinkels α₁ mit 90° ≤ α₁≤160°.

9. Laufstreifenprofil gemäß den Merkmalen von einem oder mehreren der vorangegangenen Ansprüche,
wobei die zweite Wellen- oder Zickzackform eine Zickzackform (16) ist, die sich jeweils zwischen den beiden Extremwerten (17,18) eines Berges und eines benachbarten Tales geradlinig erstreckt und in den Extremwerten (17,18) mit einer Knickstelle ausgebildet ist unter Einschluss eines Knickwinkels α₂ mit 50° ≤ α₂≤160°.

10. Laufstreifenprofil gemäß den Merkmalen von einem oder mehreren der vorangegangenen Ansprüche,
wobei die geradlinige Haupterstreckungsrichtung (9) mit der axialen Richtung A des Fahrzeugluftreifens einen Winkel β mit 35° ≥β≥0° - insbesondere mit 30° ≥β≥20°- einschließt.

11. Laufstreifenprofil gemäß den Merkmalen von einem oder mehreren der vorangegangenen Ansprüche,
wobei die erste Wellen- oder Zickzackform (10,19) die Nulldurchgangslinie der zweiten Wellen- oder Zickzackform (16,20) bildet.

12. Laufstreifenprofil gemäß den Merkmalen von einem oder mehreren der Ansprüche 1 bis 10,
wobei die Nulldurchgangslinie (9) der ersten Wellen- oder Zickzackform (10,19) auch die Nulldurchgangslinie (9) der zweiten Wellen- oder Zickzackform (16,20) bildet.

13. Laufstreifenprofil gemäß den Merkmalen von einem oder mehreren der vorangegangenen Ansprüche,
wobei der Feineinschnitt (8) mit einer längs seiner Erstreckung in der radial äußeren Oberfläche (14) veränderten Tiefe - insbesondere mit einer größeren Tiefe H in seinem mittleren Erstreckungsabschnitt als in den diesen mittleren Erstreckungsabschnitt begrenzenden Randerstreckungsabschnitten - ausgebildet ist.

## Claims

1. Tread profile of a pneumatic vehicle tyre having radially elevated profile elements (2, 3) which are delimited by channels (5, 6, 7) or grooves, having sipes (8) which are formed in the radially outer surface (14) of radially elevated profile elements and which have a rectilinear main extent direction (9) and which, at least in one portion (c) of their extent in the radially outer surface (14), are formed along their extent in each case with a profile with a first undulation or zigzag shape (10, 19) oriented along the main extent direction (9) with a first zero crossing line (9) oriented in the main extent direction, wherein, in relation to the zero crossing line (9), the undulation or zigzag shape (10, 19) defines peaks and troughs formed in alternating fashion along the main extent, with an amplitude A₁ which forms the spacing of the extreme values (11, 12) of the undulation or zigzag shape (10, 19) from the first zero crossing line (9), wherein the extreme values (11) formed in the main extent direction in two peaks formed one behind the other and the extreme values (12) formed in the main extent direction in two troughs formed one behind the other are formed in each case with a spacing of length L₁ to one another,
wherein the sipe (8), at least in an extent region of the first undulation or zigzag shape (10, 19) between the extreme value (11) formed in a peak and the extreme value (12) formed in an adjacent trough, is configured with a profile formed by superposition of the first undulation or zigzag shape (10, 19) with a second undulation or zigzag shape (16, 20), wherein the second undulation or zigzag shape (16, 20) define peaks and troughs of its profile formed in alternating fashion along its extent, with an amplitude A₂, where A₂ < A₁, which forms the spacing of the extreme values (17, 18) of the second undulation or zigzag shape (16, 20) from the zero crossing line of the second undulation or zigzag shape (16, 20), wherein the extreme values (17) formed in the extent direction in two peaks formed one behind the other and the extreme values (18) formed in the extent direction in two troughs formed one behind the other are formed in each case with a spacing of length L₂, where L₂ < L₁, to one another,
**characterized**
**in that** the sipe (8) is, in a first radial extent portion proceeding from the radially outer surface (14), along its extent radially inward to a depth t₁ with a constant amplitude A₁, configured with a constantly - in particular continuously - decreasing amplitude A₂ of its profile, wherein the amplitude A₂ is, at the radial position at the depth t₁, configured such that A₂ = 0 mm,
**in that** the sipe (8) is, in a second radial extent portion proceeding from the radial position at the depth t₁, along its extent radially inward to a depth t₂, where t₂ > t₁ with a constant amplitude A₂ = 0 mm, configured with a constantly - in particular continuously - decreasing amplitude A₁ of its profile, wherein the amplitude A₁ is, at the radial position at the depth t₂, configured such that A₁ = 0 mm.

2. Tread profile according to the features of Claim 1, wherein the sipe (8) is, in a third radial extent portion proceeding from the radial position at the depth t₂, along its extent radially inward to a depth t₃, where t₃ > t₂, configured with a constant amplitude A₂ = 0 mm and with a constant amplitude A₁ = 0 mm.

3. Tread profile according to the features of Claim 1 or 2,
wherein the length L₁ is configured such that 5 mm ≤ L₁ ≤ 20 mm.

4. Tread profile according to the features of one or more of the preceding claims,
wherein the length L₂ is configured such that 0.5 mm ≤ L₂ ≤ 4 mm.

5. Tread profile according to the features of one or more of the preceding claims,
wherein the amplitude A₁ of the sipes (8) at the radially outer surface (14) is configured such that 2.5 mm ≤ A₁ ≤ 12 mm.

6. Tread profile according to the features of one or more of the preceding claims,
wherein the amplitude A₂ of the sipes (8) at the radially outer surface (14) is configured such that 0.25 mm ≤ A₂ ≤ 6 mm.

7. Tread profile according to the features of one or more of the preceding claims,
wherein the sipe (8) is formed along its sipe base (15) with a channel-like widening (21).

8. Tread profile according to the features of one or more of the preceding claims,
wherein the first undulation or zigzag shape is a zigzag shape (10) which extends in each case rectilinearly between the two extreme values (11) of a peak and of an adjacent trough (12) and, at the extreme values (11, 12), is formed with a bend enclosing a bend angle α₁, where 90° ≤ α₁ ≤ 160°.

9. Tread profile according to the features of one or more of the preceding claims,
wherein the second undulation or zigzag shape is a zigzag shape (16) which extends in each case rectilinearly the between the two extreme values (17, 18) of a peak and of an adjacent trough and, at the extreme values (17, 18), is formed with a bend enclosing a bend angle α₂, where 50° ≤ α₂ ≤ 160°.

10. Tread profile according to the features of one or more of the preceding claims,
wherein the rectilinear main extent direction (9) encloses an angle β with the axial direction A of the pneumatic vehicle tyre, where 35° ≥ β ≥ 0°, in particular where 30° ≥ β ≤ 20°.

11. Tread profile according to the features of one or more of the preceding claims,
wherein the first undulation or zigzag shape (10, 19) forms the zero crossing line of the second undulation or zigzag shape (16, 20).

12. Tread profile according to the features of one or more of Claims 1 to 10,
wherein the zero crossing line (9) of the first undulation or zigzag shape (10, 19) also forms the zero crossing line (9) of the second undulation or zigzag shape (16, 20).

13. Tread profile according to the features of one or more of the preceding claims,
wherein the sipe (8) is formed with a depth which varies along its extent in the radially outer surface (14), in particular with a greater depth H in its central extent portion than in the edge extent portions that delimit said central extent portion.

## Revendications

1. Profil de bande de roulement d'un pneumatique de véhicule avec des éléments de profil (2, 3) radialement surélevés, limités par des sillons (5, 6, 7) ou des rainures, avec des fines incisions (8) ayant une direction d'extension principale rectiligne (9) formées dans la surface radialement extérieure (14) d'éléments de profil radialement surélevés, qui sont formées au moins dans une partie (c) de leur extension dans la surface radialement extérieure (14) le long de leur extension chacune avec un tracé ayant une première forme ondulée ou en zigzag (10, 19) orientée le long de la direction d'extension principale (9) avec une première ligne de passage par zéro (9) orientée dans la direction d'extension principale, dans lequel la forme ondulée ou en zigzag (10, 19) définit par rapport à la ligne de passage par zéro (9) des crêtes et des vallées formées en alternance le long de l'extension principale, avec une amplitude A₁, qui forme la distance des valeurs extrêmes (11, 12) de la forme ondulée ou en zigzag (10, 19) à partir de la première ligne de passage par zéro (9), dans lequel les valeurs extrêmes (11) formées dans la direction d'extension principale dans deux crêtes formées l'une derrière l'autre et les valeurs extrêmes (12) formées dans la direction d'extension principale dans deux vallées formées l'une derrière l'autre sont chacune formées à la distance de longueur L₁ l'une de l'autre, dans lequel la fine incision (8) est formée au moins dans une région d'extension entre la valeur extrême (11) formée dans une crête et la valeur extrême (12) formée dans une vallée voisine de la première forme ondulée ou en zigzag (10, 19) avec un tracé formé par superposition de la première forme ondulée ou en zigzag (10, 19) avec une deuxième forme ondulée ou en zigzag (16, 20), dans lequel la deuxième forme ondulée ou en zigzag (16, 20) définit des crêtes et des vallées de son tracé formées en alternance le long de son extension, avec une amplitude A₂, avec A₂<A₁, qui forme la distance des valeurs extrêmes (17, 18) de la deuxième forme ondulée ou en zigzag (16, 20) à partir de la ligne de passage par zéro de la deuxième forme ondulée ou en zigzag (16, 20), dans lequel les valeurs extrêmes (17) formées dans deux crêtes formées l'une derrière l'autre dans la direction d'extension et les valeurs extrêmes (18) formées dans deux vallées formées l'une derrière l'autre dans la direction d'extension sont chacune formées à la distance de longueur L₂ l'une de l'autre, avec L₂<L₁,
**caractérisé en ce que**
la fine incision (8) est formée, dans une première partie d'extension radiale à partir de la surface radialement extérieure (14), le long de son extension vers le côté radialement intérieur jusqu'à une profondeur t₁ à amplitude A₁ constante avec une amplitude A₂ de son tracé décroissante de façon constante - en particulier de façon continue -, dans lequel l'amplitude A₂ est formée avec A₂=0 mm à la position radiale de profondeur t₁,
la fine incision (8) est formée, dans une deuxième partie d'extension radiale à partir de la position radiale de profondeur t₁ le long de son extension vers le côté radialement intérieur jusqu'à une profondeur t₂, avec t₂>t₁, à amplitude constante A₂=0 mm avec une amplitude A₁ de son tracé décroissante de façon constante - en particulier de façon continue -, dans lequel l'amplitude A1 est formée avec A₁=0 mm à la position radiale de profondeur t₂.

2. Profil de bande de roulement selon les caractéristiques de la revendication 1, dans lequel la fine incision (8) est formée dans une troisième partie d'extension radiale à partir de la position radiale de profondeur t₂ le long de son extension vers le côté radialement intérieur jusqu'à une profondeur t₃, avec t₃>t₂, avec une amplitude constante A₂=0 mm et avec une amplitude constante A₁=0 mm.

3. Profil de bande de roulement selon les caractéristiques de la revendication 1 ou 2, dans lequel la longueur L₁ est formée avec 5 mm ≤ L₁ ≤ 20 mm.

4. Profil de bande de roulement selon les caractéristiques d'une ou de plusieurs des revendications précédentes, dans lequel la longueur L₂ est formée avec 0,5 mm ≤ L₂ ≤ 4 mm.

5. Profil de bande de roulement selon les caractéristiques d'une ou de plusieurs des revendications précédentes, dans lequel l'amplitude A₁ des incisions fines (8) à la surface radialement extérieure (14) est formée avec 2,5 mm ≤ A₁ ≤ 12mm.

6. Profil de bande de roulement selon les caractéristiques d'une ou de plusieurs des revendications précédentes, dans lequel l'amplitude A₂ des incisions fines (8) à la surface radialement extérieure (14) est formée avec 0,25 mm ≤ A₂ ≤ 6 mm.

7. Profil de bande de roulement selon les caractéristiques d'une ou de plusieurs des revendications précédentes, dans lequel la fine incision (8) est formée le long de son fond de fine incision (15) avec un élargissement en forme de canal (21).

8. Profil de bande de roulement selon les caractéristiques d'une ou de plusieurs des revendications précédentes, dans lequel la première forme ondulée ou en zigzag est une forme en zigzag (10), qui s'étend en ligne droite chaque fois entre les deux valeurs extrêmes (11) d'une crête et d'une vallée voisine (12) et qui est formée aux valeurs extrêmes (11, 12) avec un point d'inflexion en formant un angle d'inflexion α₁ avec 90° ≤ α₁ ≤ 160°.

9. Profil de bande de roulement selon les caractéristiques d'une ou de plusieurs des revendications précédentes, dans lequel la deuxième forme ondulée ou en zigzag est une forme en zigzag (16), qui s'étend en ligne droite chaque fois entre les deux valeurs extrêmes (17, 18) d'une crête et d'une vallée voisine et qui est formée aux valeurs extrêmes (17, 18) avec un point d'inflexion en formant un angle d'inflexion α₂ avec 50° ≤ α₂ ≤ 160°.

10. Profil de bande de roulement selon les caractéristiques d'une ou de plusieurs des revendications précédentes, dans lequel la direction d'extension principale rectiligne (9) forme avec la direction axiale A du pneumatique de véhicule un angle β avec 35° ≥ β ≥ 0°, en particulier avec 30° ≥ β ≥ 20°.

11. Profil de bande de roulement selon les caractéristiques d'une ou de plusieurs des revendications précédentes, dans lequel la première forme ondulée ou en zigzag (10, 19) forme la ligne de passage par zéro de la deuxième forme ondulée ou en zigzag (16, 20).

12. Profil de bande de roulement selon les caractéristiques d'une ou de plusieurs des revendications 1 à 10, dans lequel la ligne de passage par zéro (9) de la première forme ondulée ou en zigzag (10, 19) forme aussi la ligne de passage par zéro (9) de la deuxième forme ondulée ou en zigzag (16, 20).

13. Profil de bande de roulement selon les caractéristiques d'une ou de plusieurs des revendications précédentes, dans lequel la fine incision (8) est formée avec une profondeur modifiée le long de son extension dans la surface radialement extérieure (14) - en particulier avec une plus grande profondeur H dans sa partie d'extension centrale que dans les parties d'extension terminales limitant cette partie d'extension centrale.
